Europäisches Patentamt

European Patent Office

Office européen des brevets

(19)

(11) Veröffentlichungsnummer : **0 056 868**
**B1**

(12) **EUROPÄISCHE PATENTSCHRIFT**

(45) Veröffentlichungstag der Patentschrift :
07.11.84

(51) Int. Cl.³ : **C 09 B   7/10**

(21) Anmeldenummer : 81110724.2

(22) Anmeldetag : 23.12.81

(54) **Verfahren zur Herstellung von farbstarken 4,4',7,7'-Tetrachlorthioindigopigmenten.**

(30) Priorität : 22.01.81 DE 3101873

(43) Veröffentlichungstag der Anmeldung :
04.08.82 Patentblatt 82/31

(45) Bekanntmachung des Hinweises auf die Patenterteilung : 07.11.84 Patentblatt 84/45

(84) Benannte Vertragsstaaten :
CH DE FR GB IT LI

(56) Entgegenhaltungen :
FR-A-   389 649
FR-A- 2 300 117
GB-A- 2 022 606
US-A- 2 804 464
Die Akte enthält technische Angaben, die nach dem
Eingang der Anmeldung eingereicht wurden und die
nicht in dieser Patentschrift enthalten sind.

(73) Patentinhaber : **BASF Aktiengesellschaft**
**Carl-Bosch-Strasse 38**
**D-6700 Ludwigshafen (DE)**

(72) Erfinder : **Hoch, Helmut, Dr.**
**Waldstrasse 61**
**D-6706 Wachenheim (DE)**
Erfinder : **Hiller, Heinrich, Dr.**
**Theodor-Heuss-Strasse 11**
**D-6706 Wachenheim (DE)**

## Beschreibung

Die Erfindung betrifft ein Verfahren zur Herstellung von farbstarken 4,4',7,7'-Tetrachlorthioindigopigmenten.

4,4',7,7'-Tetrachlorthioindigo, im folgenden als Tetrachlorthioindigo bezeichnet, ist wegen seines hohen Echtheitsniveaus ein wertvoller Farbstoff für das Färben von Lacken und Kunststoffen.

Für Thioindigo und dessen Chlorderivate sind eine Reihe von Herstellverfahren bekannt. Die Herstellung erfolgt in der Regel durch Oxidation der entsprechenden 3-Hydroxythionaphthene. Nach der SU-PS 327 218 wird durch Ringschluß von 2,5-Dichlorphenylthioglykolsäure in Chlorsulfonsäure ein Gemisch aus 3-Hydroxy-4,7-dichlorthionaphthen und Tetrachlorthioindigo erhalten. Reines 3-Hydroxy-4,7-dichlorthionaphten erhält man durch Ringschluß von 2,5-Dichlorphenylthioglykolsäurechlorid mit Aluminiumchlorid (DE-PS 197 162), mit Aluminiumchlorid in organischen inerten Lösungsmitteln (US-PS 2 158 032) oder mit einem Gemisch aus Aluminiumhalogenid, Alkalimetallhalogenid und Schwefeldioxid (DE-OS 28 25 513).

Die Oxidation des 3-Hydroxy-4,7-dichlorthionaphthens, im folgenden auch als Hydroxy-dichlorthionaphthen bezeichnet, kann nach der US-PS 2 158 032 mit Natriumpolysulfid, nach der DE-PS 194 237 mit Luft, Eisen-III-chlorid, Kaliumcyanoferrat-III oder Kaliumdichromat oder nach DE-OS 25 04 935 mit Peroxidisulfat in wäßrig-alkalischer Suspension durchgeführt werden.

Nach der DE-PS 241 910 kann Tetrachlorthioindigo ohne Isolierung des Hydroxy-dichlorthionaphthens direkt aus 2,5-Dichlorphenylthioglykolsäure in Chlorsulfonsäure bei 35 °C erhalten werden. Nach den Angaben in der DE-OS 28 25 313, Seite 1, Zeilen 10/13 ist der so erhaltene Tetrachlorthioindigo wegen des Gehalts an Nebenprodukten nur begrenzt verwendbar und z. B. als Lackpigment nicht geeignet.

Aus der DE-OS 24 57 703 ist die direkte Herstellung einer Pigmentform des Tetrachlorthioindigos durch Oxidation von Hydroxydichlorthionaphthen mit Sauerstoff in alkalischwäßriger oder alkalisch-wäßrig-organischer Suspension bekannt. Bei der Nacharbeitung wurde nach diesem Verfahren ein Pigment erhalten, das trübe und farbschwache Färbungen lieferte.

Viele der bekannten Verfahren sind nicht wirtschaftlich und/oder aus ökologischen Gründen bedenklich. So gibt z. B. die in der US-PS 2 158 032 beschriebene Oxidation von Hydroxydichlorthionaphthen mit Natriumpolysulfid nach den Angaben in der DE-AS 25 04 935, Spalte 1, Zeilen 33/37 unbefriedigende Ausbeuten. Außerdem fällt ein Abwasser an, das große Mengen an Schwefelverbindungen enthält und deshalb besonders behandelt werden muß.

Bei der Oxidation von Hydroxydichlorthionaphthen mit Eisen-III-chlorid, Hexacyanoferrat-III oder Kaliumdichromat entsteht schwermetall-haltiger Tetrachlorthioindigo, der in einem zusätzlichen Schritt von Schwermetallverbindungen gereinigt werden muß.

Im Falle der Oxidation von Hydroxy-dichlorthionaphthen mit Luft nach der DE-PS 194 237 muß in hoher Verdünnung gearbeitet werden. Nach den Angaben in der DE-AS 25 04 935, Spalte 1, Zielen 40/43 erhält man nach diesem Verfahren nur eine niedrige Ausbeute. Durch Zusatz von Kupfer- oder anderen Schwermetallsalzen (DE-OS 24 57 703) wird zwar die Ausbeute bei der Luftoxidation deutlich verbessert, erreicht jedoch im Falle des Hydroxy-dichlorthionaphthens nur 76 bis 78 % der theoretisch möglichen Ausbeute. Diese ist damit deutlich geringer als die mit Kaliumdichromat oder Kaliumpermanganat erzielbaren Ausbeuten. Auch ist in diesem Falle ein zusätzlicher Schritt zur Abtrennung der Schwermetalle erforderlich.

Nach den Angaben in der DE-AS 25 04 935, Spalte 2, Zeilen 12/16 führt auch die Oxidation mit Wasserstoffperoxid, Natriumperoxid und Perborat zu deutlich geringeren Ausbeuten, was bei der Nacharbeitung bestätigt wurde.

Die Oxidation des Hydroxy-dichlorthionaphthens mit Peroxidisulfat liefert nach den Angaben in der DE-AS 25 04 935, Beispiele 1 bis 6 Tetrachlorthioindigo in 87- bis 91 %iger Ausbeute. Jedoch liefert das so erhaltene Rohpigment beim Finish nur Pigmentformen, die blaustichig trübe Färbungen liefern. Dieser Befund deutet darauf hin, daß bei der Oxidation mit Peroxidisulfat Nebenprodukte gebildet werden, welche die starke Farbtonverschiebung und das Abtrüben bewirken.

Aus der US-PS 2 804 464 ist bekannt, 3-Hydroxythionaphthenverbindungen in wäßrigem alkalischem Medium mit aromatischen Nitrosulfonsäuren wie Nitrobenzolsulfonsäuren zu Thioindigo zu oxidieren. Die dabei entstehenden Thioindigoverbindungen brauchen nicht weiter gereinigt werden. Die Teilchengröße liegt um 1um, weshalb die erhaltenen Thioindigoverbindungen bei der Anwendung als Pigmente den bekannten Pigmentformen in der Farbstärke unterlegen sind.

Aufgabe der vorliegenden Erfindung war es, ein Verfahren zu entwickeln, nach dem aus 3-Hydroxy-4,7-dichlorthionaphten direkt 4,4',7,7'-Tetrachlorthioindigo in einer farbstarken Pigmentform hergestellt werden kann.

Es wurde gefunden, daß man farbstarke 4,4',7,7'-Tetrachlorthioindigopigmente durch Oxidation von 3-Hydroxy-4,7-dichlorthionaphthen in wäßriger Suspension erhält, wenn man 3-Hydroxy-4,7-dichlorthionaphthen oder ein Gemisch aus 3-Hydroxy-4,7-dichlorthionaphthen und 4,4',7,7'-Tetrachlorthioindigo in wäßrig-alkalischer Suspension, die 0,5 bis 10 Gew.% (bezogen auf die wäßrige Suspension) Alkalimetallhydroxid enthält, mit aromatischen Nitrosulfonsäuren in Form ihrer Salze und in Gegenwart von hochsiedenden mit Wasser nicht bis wenig mischbaren aromatischen Flüssigkeiten bei 40 bis 100 °C oxidiert, nach der Beendigung der Oxidation die Suspension neutralisiert und entweder das Wasser aus der wäßrig-organischen Suspension abtrennt und die Suspension auf Temperaturen von 110 bis 180 °C erwärmt, oder aus der wäßrig-organischen Suspension das Wasser abdestilliert und die organische Suspension auf Temperaturen von 110 bis 180 °C erwärmt und dann das Pigment isoliert.

Nach dem Verfahren der vorliegenden Erfindung erhält man farbstarke Pigmentformen des Tetrachlorthioindigo, die lasierend bis deckend eingestellt werden können, je nach den Bedingungen der Rekristallisation. Man erhält nach dem Verfahren sehr reinen Tetrachlorthioindigo.

Die Bildung solcher Pigmentformen des Tetrachlorthioindigo, die farbstarke Färbungen mit hoher Brillanz liefern, aus dem Oxidationsgemisch war nicht zu erwarten und gelingt nur wenn die Oxidation mit den aromatischen Nitrosulfonsäuren durchgeführt wird. Überraschend war es außerdem, daß reine und farbstarke Pigmentformen trotz der Gegenwart von Salzen und den Reduktionsprodukten aus den Nitrosulfonsäuren erhalten werden.

Das Verfahren wird im allgemeinen so durchgeführt, daß man das 3-Hydroxy-4,7-dichlorthionaphthen oder ein Gemisch aus 3-Hydroxy-4,7-dichlorthionaphthen und Tetrachlorthioindigo in der 3- bis 20fachen Gewichtsmenge Wasser suspendiert und der Suspension soviel Alkalihydroxid zugibt, daß diese — bezogen auf die Suspension — 0,5 bis 10, vorzugsweise 2 bis 5 Gew.% davon enthält. Dann gibt man die aromatische Nitrosulfonsäure z. B. in Form eines Alkalimetallsalzes und die hochsiedende mit Wasser nicht bis wenig mischbare aromatische Flüssigkeit zu und oxidiert unter Rühren bei Temperaturen von 40 bis 100, vorzugsweise von 50 bis 80 °C. Wenn die Oxidation beendet ist, im Dünnschichtchromatogramm ist dann kein 3-Hydroxydichlorthionaphthen mehr nachzuweisen, wird das Gemisch mit Mineralsäure, vorzugsweise Schwefelsäure, neutral gestellt. Die Formierung zur Pigmentform kann so erfolgen, daß zunächst das Wasser abgetrennt wird und dann die organische Suspension auf Temperaturen zwischen 110 und 180 °C erwärmt wird, wobei noch verbliebene Wasserreste abdestillieren. Vorzugsweise verfährt man so, daß man aus der neutralen wäßrig-organischen Suspension zunächst das Wasser abdestilliert oder auskreist und dann die organische Suspension auf Temperaturen von 110 bis 180 °C erwärmt und das Gemisch bei der gewählten Temperatur hält. Die Temperaturbehandlung dauert im allgemeinen 3 bis 20, insbesondere 4 bis 15 Stunden.

Danach wird das Pigment in üblicher Weise aus der organischen Flüssigkeit isoliert, z. B. durch Absaugen und Waschen des Filtergutes mit einem mit Wasser mischbaren Lösungsmittel und zuletzt mit Wasser und gegebenenfalls Trocknen des Filtergutes.

Die organische Flüssigkeit kann aus der organischen Pigmentsuspension oder aus dem Filtergut auch durch Einleiten von Wasserdampf entfernt werden und das Pigment aus der wäßrigen Suspension isoliert werden.

Die Wassermenge bei der Oxidation ist nicht kritisch und beträgt im allgemeinen das 3- bis 20fache, vorzugsweise das 4- bis 8fache, bezogen auf die Ausgangsverbindung bzw. das Ausgangsverbindungsgemisch. Um hohe Raum-Zeit-Ausbeuten zu erzielen, wird man nicht mehr Wasser anwenden als notwendig ist.

Die Menge an aromatischer Nitrosulfonsäure beträgt 10 bis 50 Gew.%, bezogen auf das Ausgangsprodukt 3-Hydroxy-4,7-dichlorthionaphthen oder auf das Gemisch aus Tetrachlorthioindigo und Hydroxydichlorthionaphthen.

Als aromatische Nitrosulfonsäuren kommen Nitrobenzolsulfonsäuren, Nitro phenolsulfonsäuren in Betracht, die gegebenenfalls durch $C_1$- bis $C_4$-Alkyl substituiert sind.

Aus wirtschaftlichen Gründen sind Nitrotoluolsulfonsäure und insbesondere m-Nitrobenzolsulfonsäure als Oxidationsmittel bevorzugt.

Die Nitrosulfonsäuren werden vorteilhafterweise in Form ihrer Alkalimetallsalzlösungen angewendet.

Als hochsiedende mit Wasser nicht bis wenig mischbare aromatische Flüssigkeiten kommen Alkylbenzole, die Chlorbenzole, Chlortoluol und aromatische Nitrokohlenwasserstoffe in Betracht. Im einzelnen sind zu nennen : Xylol, Chlorbenzol, o-Dichlorbenzol, Trichlorbenzol, Chlortoluol, Nitrobenzol und Nitrotoluol, von denen Nitrobenzol bevorzugt ist.

Durch die Temperatur und die Dauer der Temperatureinwirkung in der aromatischen Flüssigkeit kann die Koloristik der Pigmentform gesteuert werden, z. B. zu Pigmenten, die im Vollton lasierendere oder deckendere Färbungen geben.

Pigmentformen, die im Vollton lasierendere Färbungen geben, erhält man durch 4- bis 8-stündiges Erwärmen in der aromatischen Flüssigkeit auf 110 bis 130 °C.

Im Vollton deckendere Färbungen erhält man mit Tetrachlorthioindigopigmenten, die 6 bis 15 Stunden auf 140 bis 160 °C in der aromatischen Flüssigkeit erwärmt wurden.

Im Weißverschnitt geben die nach dem erfindungsgemäßen Verfahren erhaltenen Pigmentformen farbstarke Färbungen mit hoher Brillanz.

Weiterhin kann mit Hilfe der Temperatur und der Dauer der Temperaturbehandlung der Farbton der Pigmentform nach gelber oder nach blauer verschoben werden. So wird bei höheren Temperaturen und längerer Temperatureinwirkung, z. B. bei 150 °C während 10 h, der Farbton blaustichiger und bei niedrigeren Temperaturen und kürzerer Temperatureinwirkung, z. B. bei 120 °C während 6 h, der Farbton gelbstichiger.

Die nach dem Verfahren gemäß der vorliegenden Erfindung erhaltenen Pigmente sind den Pigmenten des Standes der Technik in einer oder mehreren der folgenden Eigenschaften : Brillanz, Farbstärke oder Dispergierbarkeit überlegen.

Das Verfahren der Erfindung soll durch die folgenden Ausführungsbeispiele weiter erläutert werden. Die im folgenden genannten Teile und Prozentangaben beziehen sich auf das Gewicht.

Beispiel 1

a) 850 Teile Chlorsulfonsäure werden auf 0 °C abgekühlt, dann werden 100 Teile 2,5-Dichlorphenylthioglykolsäure so eingetragen, daß die Temperatur durch Kühlung bei 0 bis 5 °C gehalten wird. Eintragdauer : 1 h. Das Gemisch wird 5 h bei 0 bis 5 °C gerührt und danach die Suspension auf 25 000 Teile Eis unter Rühren ausgefällt. Das ausgefällte 4,4′,7,7′-Tetrachlorthioindigo/3-Hydroxy-4,7-dichlorthionaphthen-Gemisch wird durch Filtration isoliert und mit Wasser von 20 °C neutralgewaschen. Das Gemisch wird als wäßriger Teig weiterverarbeitet.

b) 30 Teile 4,4′,7,7′-Tetrachlorthioindigo/3-Hydroxy-4,7-dichlorthionaphthen-Gemisch aus a) in Form des Preßkuchens werden mit Wasser zu einer 20 %igen wäßrigen Suspension angerührt und 7 Teile Natronlauge (50 %ig) zugegeben. Nach dem Eintragen von 9 Teilen 3-nitrobenzolsulfonsaurem Natrium und Zugeben von 210 Teilen Nitrobenzol wird die Mischung zunächst auf 65 °C geheizt und 2 h bei dieser Temperatur gehalten. Die Mischung wird dann mit 50 %iger Schwefelsäure auf pH 6,8 gestellt und anschließend in ca. 1 h unter Abdestillieren von Wasser (120 Teile zusammen mit ca. 20 Teilen Nitrobenzol destillieren ab) auf 140 °C geheizt. Unter Rühren wird 6 h bei 140 °C gehalten. Nach dem Abkühlen auf ca. 70 °C wird das Pigment abfiltriert und mit wenig Nitrobenzol gewaschen. Das anhaftende Nitrobenzol wird mit 200 Teilen Methanol ausgewaschen und anschließend das Methanol und die ausgefallenen Salze durch Waschen mit Wasser von 60 °C entfernt. Das Pigment wird getrocknet und pulverisiert. Ausbeute : 29 Teile rotviolettes 4,4′,7,7′-Tetrachlorthioindigopigment, das im Purton in Einbrennlacken deckende Färbungen, in der Weißaufhellung mit Titandioxid farbstarke, brillante Färbungen liefert.

Beispiel 2

30 Teile des 4,4′,7,7′-Tetrachlorthioindigo/3-Hydroxy-4,7-dichlorthionaphthen-Gemisches aus Beispiel 1a) werden mit Wasser zu einer 23 %igen Suspension (130 Teile) angerührt und 7 Teile Natronlauge (50 %ig) zugegeben. Danach werden 10 Teile 3-nitrobenzolsulfonsaures Natrium und 200 Teile Nitrobenzol zugegeben und die Mischung zunächst auf 65 °C gehalten. Danach wird die Mischung mit 50 %iger Schwefelsäure auf pH 6,8 gestellt und anschließend unter Abdestillieren von Wasser auf 125 °C geheizt. Dabei destillieren 100 Teile Wasser und 10 Teile Nitrobenzol ab. Man rührt 6 h bei 125 °C, kühlt dann auf ca. 70 °C ab, filtriert das Pigment ab und wäscht es mit wenig Nitrobenzol. Das anhaftende Nitrobenzol wird mit 200 Teilen Methanol ausgewaschen. Anschließend wird das Methanol und die ausgefallenen Salze durch Waschen mit Wasser von 60 °C entfernt. Das Pigment wird getrocknet und pulverisiert. Ausbeute : 29 Teile eines Tetrachlorthioindigopigments, das im Purton gegenüber dem Pigment des Beispiels 1b) in Einbrennlacken lasierende Färbungen und in der Weißaufhellung mit Titandioxid farbstarke, brillante Ausfärbungen liefert, die im Farbton gegenüber dem Pigment des Beispiels 1 deutlich gelber liegen.

Beispiel 3

30 Teile des 4,4′,7,7′-Tetrachlorthioindigo/3-Hydroxy-4,7-dichlorthionaphthen-Gemisches aus Beispiel 1a) in Form des Preßkuchens werden mit Wasser zu einer 20 %igen Suspension (150 Teile) angerührt und 7 Teile Natronlauge (50 %ig) zugegeben. Nach dem Eintragen von 9 Teilen 4-nitro-2-methyl-benzolsulfonsaurem Natrium und 200 Teilen o-Dichlorbenzol wird die Mischung auf 65 °C aufgeheizt und 1,5 h bei dieser Temperatur gehalten. Danach wird mit Schwefelsäure (50 %ig) auf pH 7 gestellt und anschließend in ca. 1 h unter Abdestillieren von Wasser auf 130 °C geheizt. Man rührt 5 h bei 130 °C und kühlt dann auf 70 °C ab. Aufarbeitung folgt Beispiel 2. Ausbeute : 28,5 Teile eines Tetrachlorthioindigopigments, das in der Koloristik ähnlich dem Pigment des Beispiels 2 ist.

Beispiel 4

30 Teile des 4,4′,7,7′-Tetrachlorthioindigo/3-Hydroxy-4,7-dichlorthionaphthen-Gemisches aus Beispiel 1a) in Form des Preßkuchens werden mit Wasser zu einer 21,5 %igen Suspension (140 Teile) angerührt und 6 Teile Natronlauge (50 %ig) zugegeben. Nach dem Eintragen von 8,5 Teilen 3-nitrobenzolsulfonsaurem Natrium und 180 Teilen o-Nitrotoluol wird die Mischung zunächst auf 70 °C aufgeheizt und 1 h bei dieser Temperatur gehalten. Danach wird mit Schwefelsäure (75 %ig) auf pH 7 gestellt und anschließend die Mischung in ca. 45 Minuten unter Abdestillieren von Wasser auf 150 °C geheizt. Man rührt 6 h bei 150 °C und kühlt dann auf 70 °C ab. Die Aufarbeitung folgt Beispiel 2. Ausbeute : 28 Teile eines Tetrachlorthioindigopigments, das in der Koloristik ähnlich dem Pigment des Beispiels 1 liegt.

Beispiel 5

22 Teile 3-Hydroxy-4,7-dichlorthionaphther (erhalten nach Beispiel 2 des US-Patents 2 158 032 aus 2,5-Dichlorphenylthioglykolsäure) werden in 90 Teilen Wasser und 10 Teilen Natronlauge (50 %ig) suspendiert. Man trägt 11 Teile 3-nitrobenzolsulfonsaures Natrium ein, gibt 110 Teile Nitrobenzol zu, heizt die Mischung auf 70 °C und hält 3/4 h bei dieser Temperatur. Danach stellt man mit Schwefelsäure (75 %ig) auf pH 7 und heizt in ca. 1 h auf 145 °C, unter Abdestillieren von Wasser. Die Mischung wird 5 h bei 145 °C gerührt und auf 70 °C abgekühlt. Die Aufarbeitung folgt Beispiel 1. Ausbeute : 20 Teile eines 4,4',7,7'-Tetrachlorthioindigopigments, das in seiner Koloristik dem Pigment des Beispiel 1 entspricht.

**Ansprüche**

1. Verfahren zur Herstellung von farbstarken 4,4',7,7'-Tetrachlorthioindigopigmenten durch Oxidation von 3-Hydroxy-4,7-dichlorthionaphthen in wäßriger Suspension, dadurch gekennzeichnet, daß man 3-Hydroxy-4,7-dichlorthionaphthen oder ein Gemisch aus 3-Hydroxy-4,7-dichlorthionaphthen und 4,4',7,7'-Tetrachlorthioindigo in wäßrig-alkalischer Suspension, die 0,5 bis 10 Gew.% (bezogen auf die wäßrige Suspension) Alkalimetallhydroxid enthält, mit aromatischen Nitrosulfonsäuren in Form ihrer Salze und in Gegenwart von hochsiedenden mit Wasser nicht bis wenig mischbaren aromatischen Flüssigkeiten bei 40 bis 100 °C oxidiert, nach der Beendigung der Oxidation die Suspension neutralisiert und entweder das Wasser aus der wäßrig-organischen Suspension abtrennt und die Suspension auf Temperaturen von 110 bis 180 °C erwärmt, oder aus der wäßrig-organischen Suspension das Wasser abdestilliert und die organische Suspension auf Temperaturen von 110 bis 180 °C erwärmt und dann das Pigment isoliert.

2. Verfahren nach Anspruch 1, dadurch gekennzeichnet, daß man das Wasser aus der neutralen wäßrig-organischen Suspension abdestilliert, dann die organische Suspension auf Temperaturen von 110 bis 180 °C erwärmt und das Pigment aus der organischen Phase isoliert.

3. Verfahren nach Anspruch 1 oder 2, dadurch gekennzeichnet, daß die Oxidation in einer wäßrigen Suspension erfolgt, die 2 bis 5 Gew.% Alkalimetallhydroxid, bezogen auf die wäßrige Suspension des Ausgangsstoffes, enthält.

4. Verfahren nach den Ansprüchen 1, 2 oder 3, dadurch gekennzeichnet, daß die Oxidation mit 10 bis 50 Gew.%, bezogen auf 3-Hydroxy-4,7-dichlorthionaphthen oder 3-Hydroxy-4,7-dichlorthionaphthen/Tetrachlorthioindigo-Gemisch, der aromatischen Nitrosulfonsäure in Form der Alkalimetallsalze erfolgt.

5. Verfahren nach den Ansprüchen 1 bis 4, dadurch gekennzeichnet, daß als aromatische Nitrosulfonsäuren Nitrobenzolsulfonsäure oder Nitrophenolsulfonsäure, die gegebenenfalls im Benzolring durch C$_1$- bis C$_4$-Alkyl substituiert sind, verwendet werden.

6. Verfahren nach den Ansprüchen 1 bis 4, dadurch gekennzeichnet, daß als aromatische Nitrosulfonsäure Nitrobenzolsulfonsäure verwendet wird.

7. Verfahren nach den Ansprüchen 1 bis 6, dadurch gekennzeichnet, daß als hochsiedende mit Wasser nicht mischbare bis wenig mischbare aromatische Flüssigkeiten Xylol, Chlorbenzol, o-Dichlorbenzol, Trichlorbenzol, Chlortoluol, Nitrobenzol oder Nitrotoluol verwendet werden.

8. Verfahren nach den Ansprüchen 1 bis 6, dadurch gekennzeichnet, daß als hochsiedende mit Wasser nicht mischbare aromatische Flüssigkeit Nitrobenzol angewendet wird.

**Claims**

1. A process for the preparation of 4,4',7,7'-tetrachlorothioindigo pigments of high color strength by oxidation of 3-hydroxy-4,7-dichlorothionaphthene in aqueous suspension, wherein 3-hydroxy-4,7-dichlorothionaphthene or a mixture of 3-hydroxy-4,7-dichlorothionaphthene and 4,4',7,7'-tetrachlorothioindigo in aqueous-alkaline suspension, which contains from 0.5 to 10 % by weight, based on the aqueous suspension, of an alkali metal hydroxide, is oxidized with a salt of a nitro-aromatic sulfonic acid in the presence of a high-boiling water-immiscible or only slightly water-miscible aromatic liquid at from 40 to 100 °C, the suspension is neutralized after the oxidation is over, and either the water is separated off from the aqueous organic suspension and the suspension is heated to 110-180 °C, or the water is distilled off from the aqueous organic suspension, the organic suspension is heated to 110-180 °C, and the pigment is then isolated.

2. A process as claimed in claim 1, wherein the water is distilled off from the neutral aqueous-organic suspension, the organic suspension is then heated to 110-180 °C, and the pigment is isolated from the organic phase.

3. A process as claimed in claim 1 or 2, wherein the oxidation is carried out in an aqueous suspension which contains from 2 to 5 % by weight, based on the aqueous suspension of the starting material, of an alkali metal hydroxide.

4. A process as claimed in claim 1, 2 or 3, wherein the oxidation is carried out using from 10 to 50 % by weight, based on 3-hydroxy-4,7-dichlorothionaphthene or the 3-hydroxy-4,7-dichlorothionaphthene/tetrachlorothioindigo mixture, of an alkali metal salt of a nitro-aromatic sulfonic acid.

5. A process as claimed in claims 1 to 4, wherein nitrobenzenesulfonic acid or nitrophenolsulfonic acid, which is unsubstituted or substituted in the benzene ring by C$_1$-C$_4$-alkyl, is used as the nitro-aromatic sulfonic acid.

6. A process as claimed in claims 1 to 4, wherein nitrobenzenesulfonic acid is used as the nitro-aromatic sulfonic acid.

7. A process as claimed in claims 1 to 6, wherein xylene, chlorobenzene, o-dichlorobenzene, trichlorobenzene, chlorotoluene, nitrobenzene or nitrotoluene is used as the high-boiling, water-immiscible or only slightly water-miscible aromatic liquid.

8. A process as claimed in claims 1 to 6, wherein nitrobenzene is used as the high-boiling, water-immiscible aromatic liquid.

## Revendications

1. Procédé de préparation de pigments 4,4',7,7'-tétrachlorothioindigo à haut pouvoir tinctorial par oxydation de 3-hydroxy-4,7-dichlorothionaphtène en suspension aqueuse, caractérisé en ce qu'on oxyde du 3-hydroxy-4,7-dichlorothionaphtène, ou un mélange de 3-hydroxy-4,7-dichlorothionaphtène et de 4,4'7,7'-tétrachlorothioindigo en suspension aqueuse alcaline, qui renferme 0,5 à 10 % en poids (rapporté à la suspension aqueuse) d'hydroxyde alcalin, avec des acides nitrosulfoniques sous la forme de leurs sels et en présence de liquides aromatiques à point d'ébullition élevé, pas ou peu miscibles à l'eau, de 40 à 100 °C, on neutralise la suspension après achèvement de l'oxydation et l'on sépare l'eau de la suspension aqueuse organique, et l'on chauffe la suspension à des températures de 110 à 180 °C, ou bien l'on sépare par distillation l'eau de la suspension aqueuse organique et l'on chauffe la suspension organique à des températures de 110 à 180 °C, et l'on isole alors le pigment.

2. Procédé selon la revendication 1, caractérisé en ce que l'on sépare par distillation l'eau de la suspension organique aqueuse, puis l'on chauffe la suspension organique à des températures de 110 à 180 °C et l'on isole le pigment de la phase organique.

3. Procédé selon la revendication 1 ou 2, caractérisé en ce que l'on effectue l'oxydation dans une suspension aqueuse renfermant 2 à 5 % en poids d'hydroxyde alcalin, rapporté à la suspension aqueuse de la matière de départ.

4. Procédé selon l'une quelconque des revendications 1 à 3, caractérisé en ce qu'on effectue l'oxydation avec 10 à 50 % en poids, rapporté au 3-hydroxy-4,7-dichlorothionaphtène ou au mélange de 3-hydroxy-4,7-dichlorothionaphtène et de tétrachlorothioindigo, de l'acide nitrosulfonique aromatique sous la forme des sels alcalins.

5. Procédé selon les revendications 1 à 4, caractérisé en ce que l'on utilise, comme acides nitrosulfoniques aromatiques, l'acide nitrobenzène-sulfonique ou l'acide nitrophénol-sulfonique, avec substitution éventuelle par un alcoyle comportant 1 à 4 atomes de carbone sur le noyau benzénique.

6. Procédé selon les revendications 1 à 4, caractérisé en ce que l'on utilise, comme acide nitrosulfonique aromatique, l'acide nitrobenzènesulfonique.

7. Procédé selon les revendications 1 à 6, caractérisé en ce que l'on utilise, comme liquides aromatiques à point d'ébullition élevé, non miscibles ou peu miscibles à l'eau, le xylène, le chlorobenzène, l'o-dichlorobenzène, le trichlorobenzène, le chlorotoluène, le nitrobenzène ou le nitrotoluène.

8. Procédé selon les revendications 1 à 6, caractérisé en ce que l'on utilise, comme liquide aromatique à point d'ébullition élevé non miscible à l'eau, le nitrobenzène.